# EUROPEAN PATENT SPECIFICATION

(11) **EP 2 471 837 B1**
(45) Date of publication and mention of the grant of the patent: **14.01.2015**
(21) Application number: 10817143.0
(22) Date of filing: 13.09.2010
(51) Int. Cl.: C08G 65/28, C08G 18/48, C08G 63/664, C08G 65/00

(54) **POLYETHER PREPARATION METHOD**
VERFAHREN ZUR POLYETHERHERSTELLUNG
PROCÉDÉ DE PRÉPARATION DE POLYÉTHER

(30) Priority: 17.09.2009 JP 2009215600
(43) Date of publication of application: 04.07.2012
(73) Proprietor: Asahi Glass Company, Limited, Tokyo 100-8405 (JP)
(72) Inventor: ARAI, Takeaki, Tokyo 100-8405 (JP); SUZUKI, Chitoshi, Tokyo 100-8405 (JP)
(74) Representative: Hartz, Nikolai
(86) International application number: PCT/JP2010/065758
(87) International publication number: WO 2011/034030

(56) References cited:
- EP-A1- 0 428 737
- EP-A1- 2 058 352
- WO-A1-98/52689
- WO-A1-2008/026657
- JP-A- 2001 514 574
- JP-A- 2001 525 878
- JP-A- 2007 314 787
- JP-A- 2008 534 760
- US-A- 3 538 043

## Description

### TECHNICAL FIELD

The present invention relates to a process for producing a polyether using a double metal cyanide complex catalyst.

### BACKGROUND ART

Polyol compounds represented by polyether polyols and polyester polyols are widely used as materials for polyurethane products such as polyurethane elastomers, elastic fibers, adhesives and sealants, and functional lubricants.

In general, a polyether such as the above polyester polyol is produced by subjecting an alkylene oxide to ring-opening addition polymerization to an initiator in the presence of a catalyst. As the polymerization catalyst, heretofore, an alkali metal compound catalyst (e.g. sodium type catalyst, potassium type catalyst or cesium type catalyst), a cationic polymerization catalyst, a metal porphyrin catalyst, a compound having a P=N bond, such as a phosphazenium compound, a double metal cyanide complex catalyst and the like have been used. Among these catalysts, the double metal cyanide complex catalyst (hereinafter sometimes referred to as "DMC (double metal cyanide) catalyst") has high catalytic activity as compared with the former four catalysts and is a polymerization catalyst useful for production of a polyether.

With a DMC catalyst, due to high catalytic activity, a polyether can be produced with its use at a low concentration, and the amount of the DMC catalyst remaining in a polyether to be obtained is very small. It is advantageous in that a step of removing the catalyst, which is essential when the other alkali metal compound catalyst and the like are used, is unnecessary. However, if the DMC catalyst is used for production of a polyether, due to low catalyst concentration, the catalytic activity will be decreased and lost, in a case where there is a cause which leads to a catalyst poison in the system, such that the water content is at least 0.1%, the pH is alkaline, or there is a large amount of free acids (the acid value is at least 5 mgKOH/g).

The most effective way is to preliminarily make the reaction system contain no catalyst poison. However, the catalyst poison cannot be avoided when the oxygen-containing heterocyclic compound other than an alkylene oxide to be subjected to ring-opening addition polymerization as the material is an acid, as in the case of preparing particularly a polyether ester polyol among polyethers, and a decrease in the activity to a certain extent must be taken into consideration.

Further, when it is preliminarily estimated that the activity of the DMC catalyst is weak, a method of increasing the activity has been proposed. For example, Patent Documents 1 and 2 disclose a method of pretreating the initiator and the DMC catalyst. However, by the method of pretreating the DMC catalyst as disclosed in Patent Document 1, the activity can be increased to a certain extent by increasing the concentration of the DMC catalyst, however, if the initiator and the DMC catalyst themselves contain moisture, the above problem is not necessarily sufficiently solved depending on the production conditions. Further, if the concentration of the DMC catalyst is increased, the DMC catalyst amount remaining in the polyether to be obtained will be increased. If a polyether having a large remaining DMC catalyst amount is used to produce a polyurethane resin, there is such a problem that the remaining DMC catalyst inhibits the reaction of the polyether with a polyisocyanate compound. Patent Document 2 discloses a process for producing a polyether polyol among polyethers, which comprises pretreatment of heating the mixture of the initiator with the DMC catalyst under reduced pressure while inert gas is sprayed. However, this process requires special equipment and costs a lot, since a step of spraying inert gas so as to dehydrate the catalyst is essential. Further, Patent Document 2 failed to disclose production of polyethers other than the polyether polyol, which is likely to be free from causes to inhibit activity, and failed to assume a system in which a decrease in activity is preliminarily estimated.

### PRIOR ART DOCUMENTS

### PATENT DOCUMENTS

Patent Document 1: JP-A-2007-314787
Patent Document 2: JP-A-2001-525878

### DISCLOSURE OF INVENTION

### TECHNICAL PROBLEM

The present invention has been made to solve the above problems, and it is an object of the present invention to provide a process for producing a polyether, which comprises subjecting an alkylene oxide and an oxygen-containing heterocyclic compound other than an alkylene oxide to ring-opening addition polymerization to an initiator in the presence of a DMC catalyst, wherein the DMC catalyst at a low concentration can be used, and the amount of the DMC catalyst remaining in a polyether to be obtained can be reduced.

### SOLUTION TO PROBLEM

The present invention provides the following [1] to [9].
[1] A process for producing a polyether, which comprises subjecting an alkylene oxide and an oxygen-containing heterocyclic compound other than an alkylene oxide, to ring-opening addition polymerization to an initiator having a hydroxy group in the presence of a double metal cyanide complex catalyst, wherein prior to the ring-opening addition polymerization, the double metal cyanide complex catalyst and the initiator are subjected to mixing treatment at a temperature of from 125°C to 180°C under an absolute pressure of at most 0.06 MPa for from 10 minutes to 24 hours.
[2] The process for producing a polyether according to [1], wherein the amount of the double metal cyanide complex catalyst is from 10 to 200 ppm based on the initiator.
[3] The process for producing a polyether according to [1] or [2], wherein the initiator is at least one member selected from compounds having from 1 to 12 hydroxy groups on average in one molecule and having a number average molecular weight (Mn) of from 18 to 20,000.
[4] The process for producing a polyether according to any one of [1] to [3], wherein the oxygen-containing heterocyclic compound other than an alkylene oxide is at least one member selected from the group consisting of a cyclic ether other than an alkylene oxide, a carboxylic anhydride and a cyclic ester.
[5] The process for producing a polyether according to any one of [1] to [4], wherein the polyether is a polyether monool, a polyether polyol, a polyester ether monool, a polyester ether polyol or a derivative thereof.
[6] The process for producing a polyether according to any one of [1] to [5], wherein the content of the remaining double metal cyanide complex catalyst is from 1 to 80 ppm based on the entire amount of the polyether produced.
[7] The process for producing a polyether according to any one of [1] to [6], wherein the alkylene oxide is ethylene oxide or propylene oxide.
[8] The process for producing a polyether according to any one of [1] to [7], wherein the double metal cyanide complex catalyst has an organic ligand comprising tert-butyl alcohol.
[9] A process for producing a polyurethane resin comprising performing the method steps according to any one of [1] to [8] and reading the polyether obtained thereby with a polyisocyanate compound.

### ADVANTAGEOUS EFFECTS OF INVENTION

According to the present invention, production of a polyether by subjecting an alkylene oxide and the like to ring-opening addition polymerization to an initiator having a hydroxy group in the presence of a DMC catalyst, can be carried out by use of the DMC catalyst at a low concentration. Further, according to the production process of the present invention, the amount of the DMC catalyst remaining in the form of an alkali neutralized salt, an acid or the like in the polyether to be obtained can be reduced. Further, when a polyurethane resin is produced by using the polyether obtained, production of a polyurethane is possible without inhibiting the reaction by the remaining DMC catalyst.

### DESCRIPTION OF EMBODIMENTS

In this specification, "a polyether" means a group of compounds comprehensively including a monool having an ether bond, a polyol and a derivative thereof. The initiator having a hydroxy group will sometimes be referred to simply as an initiator.

In this specification, "the alkylene oxide and the like" described in connection with the ring-opening addition polymerization reaction means "a combination of an alkylene oxide and an oxygen-containing heterocyclic compound other than an alkylene oxide" to be subjected to ring-opening addition polymerization. In the ring-opening addition polymerization reaction, "the combination of an alkylene oxide and an oxygen-containing heterocyclic compound other than an alkylene oxide" does not only means a state where the alkylene oxide and the oxygen-containing heterocyclic compound other than an alkylene oxide are used together with each other simultaneously or in the form of a mixture, but means that forms selected from (i) only the alkylene oxide, (ii) only the oxygen-containing heterocyclic compound other than an alkylene oxide and (iii) the alkylene oxide and the oxygen-containing heterocyclic compound other than an alkylene oxide are used in combination simultaneously or sequentially to finally achieve "the combination of the alkylene oxide and the oxygen-containing heterocyclic compound other than an alkylene oxide". For example, in a method wherein at the initial stage of the ring-opening addition polymerization reaction, (i) is charged and then (ii) is charged, (i) and (ii) are "the alkylene oxide and the like", and in the ring-opening addition polymerization reaction employing only (iii), (iii) is referred to as "the alkylene oxide and the like".

In this specification, "the molecular weight distribution" means a value calculated from the formula of the mass average molecular weight (Mw)/number average molecular weight (Mn) using the number average molecular weight (Mn), and the mass average molecular weight (Mw) as calculated as polystyrene measured by GPC similarly.

The process for producing a polyether of the present invention is a process for producing a polyether, which comprises subjecting an alkylene oxide and an oxygen-containing heterocyclic compound other than an alkylene oxide to an initiator in the presence of a DMC catalyst. Now, the respective materials, the production process, etc. will be described.

### (Polyether)

The polyether to which the production process of the present invention is applicable is usually not particularly limited so long as it is a polyether obtainable by subjecting an oxygen-containing heterocyclic compound including an alkylene oxide to an initiator in the presence of a catalyst. Such a polyether may be a monool having an ether bond and a polyol, obtainable by subjecting an alkylene oxide and an oxygen-containing heterocyclic compound other than an alkylene oxide to ring-opening addition polymerization to an initiator in the presence of a DMC catalyst.

More specifically, it may, for example, be a polyether monool or a polyether polyol (hereinafter both will sometimes be referred to as "a polyether poly(mono)ol") having a chemical structure of a polyether monool or a polyether polyol comprising repeating units of oxyalkylene derived from the alkylene oxide bonded to the initiator and further having an ether bond not derived from the alkylene oxide, in part of the above structure, a polyester ether monool or a polyester ether polyol having an ester bond, or a polyether carbonate monool or a polyether carbonate polyol having a carbonate bond. Among them, preferred is the above polyether monool, polyether polyol, polyester ether monool or polyester ether polyol. Further, a derivative having part of the ether bond in the interior of such a monool or polyol having an ether bond replaced with e.g. a carbonate, an amide or a urethane is also included.

### (Double metal cyanide complex catalyst (DMC catalyst))

The double metal cyanide complex catalyst to be used in the production process of the present invention is not particularly limited so long as it is a DMC catalyst usually used for production of a polyether, and as a representative example, a compound represented by the following formula (1) may be mentioned.

M¹ₐ[M²_{b}(CN)_{c}]_{d}e(M³_{f}X_{g})h(H₂O)i(L) (1)

wherein each of M¹ to M³ is a metal, X is a halogen atom, L is an organic ligand, and a, b, c, d, e, f, g, h and i are numbers variable depending on the valencies of the metals, the coordination number of the organic ligand, etc., and M¹ and M³ are preferably the same.

In the above formula (1), each of the metals represented by M¹ and M³ is preferably a metal selected from Zn(II), Fe(II), Fe(III), Co(II), Ni(II), Mo(IV), Mo(VI), Al(III), V(V), Sr(II), W(IV), W(VI), Mn(II), Cr(III), Cu(II), Sn(II) and Pb(II), more preferably Zn(II) or Fe(II). In the above formula (1), the metal represented by M² is preferably a metal selected from Fe(II), Fe(III), Co(II), Co(III), Cr(II), Cr(III), Mn(II), Mn(III), Ni(II), V(IV) and V(V), more preferably Co(III) or Fe(III). Further, Roman numerals such as II, III, IV, V in brackets following the symbols of elements of the metals mean the valencies of the respective metals.

In the above formula (1), L representing the organic ligand is preferably at least one compound selected from the group consisting of an alcohol, an ether, a ketone, an ester, an amine and an amide. In the production process of the present invention, among them, a water-soluble one is preferred as the organic ligand L, and as its specific examples, one or more compounds selected from the group consisting of tert-butyl alcohol, n-butyl alcohol, sec-butyl alcohol, iso-butyl alcohol, tert-pentyl alcohol, iso-pentyl alcohol, N,N-dimethylacetamide, glyme (ethylene glycol dimethyl ether), diglyme (diethylene glycol dimethyl ether), triglyme (triethylene glycol dimethyl ether), ethylene glycol mono-tert-butyl ether, iso-propyl alcohol and dioxane may be mentioned. Dioxane may be either 1,4-dioxane or 1,3-dioxane and is preferably 1,4-dioxane.

In the DMC catalyst to be used in the production process of the present invention, a more preferred organic ligand is tert-butyl alcohol alone or a combination of tert-butyl alcohol with the above-exemplified compound. Further, among them, more preferred is tert-butyl alcohol alone or a combination of tert-butyl alcohol and ethylene glycol mono-tert-butyl ether. The DMC catalyst having such an organic ligand has high catalytic activity for the ring-opening addition polymerization reaction of the alkylene oxide and the like to the initiator in the present invention, whereby a polyether having a narrow molecular weight distribution and having a low viscosity can be obtained. Further, with such a DMC catalyst, formation of a monool having an unsaturated bond in the ring-opening addition polymerization can be suppressed so that, for example, the total degree of unsaturation is at most 0.009 (meq/g).

The above DMC catalyst to be used in the present invention can be prepared by a conventional production method. The conventional production method is not particularly limited, and the DMC catalyst can be produced by an optional production method. As a method for producing a DMC catalyst having an organic ligand preferably employed in the present invention, for example, a method as disclosed in JP-A-2003-117403 may be employed. More specifically, it may be a method wherein a cake (solid component) is separated by filtration and further dried, the cake being obtainable by (i) a method wherein an organic ligand is made to coordinate to a reaction product obtainable by reacting a halogenated metal salt and cyanometalate acid and/or an alkali metal cyanometalate in an aqueous solution, and then the formed solid component is separated, and the separated solid component is further washed with an organic ligand aqueous solution, or (ii) a method wherein a halogenated metal salt and cyanometalate acid and/or an alkali metal cyanometalate are reacted in an organic ligand aqueous solution, the obtained reaction product (solid component) is separated, and the separated solid component is further washed with an organic ligand aqueous solution.

In the above alkali metal cyanometalate to be used for preparation of the DMC catalyst, the metal constituting the cyanometalate is preferably at least one metal selected from the group consisting of Fe(II), Fe(III), Co(II), Co(III), Cr(II), Cr(III), Mn(II), Mn(III), Ni(II), V(IV) and V(V), more preferably Co(III) or Fe(III), particularly preferably Co(III).

The cyanometalate acid and the alkali metal cyanometalate used as materials for preparation of the DMC catalyst are preferably H₃[Co(CN)₆], Na₃[Co(CN)₆] or K₃[Co(CN)₆], most preferably Na₃[Co(CN)₆] or K₃[Co(CN)₆].

Further, in the method for producing the DMC catalyst, at a stage prior to separation by filtration of the cake, a polyether polyol or a polyether monool may be mixed with the liquid having the solid component dispersed in the organic ligand aqueous solution, and water and excessive organic ligand are distilled off from the obtained mixed liquid to prepare a DMC catalyst mixture (hereinafter sometimes referred to as "a slurry-form DMC catalyst") in the form of a slurry having the DMC catalyst dispersed in the polyether polyol or the polyether monool.

The polyether polyol or the polyether monool to be used for preparation of the slurry-form DMC catalyst may be separated from the DMC catalyst at the production of the polyether, and the separated DMC catalyst may be used for production of the polyether. However, this polyether polyol or polyether monool is used preferably as a part of or all of the after-mentioned initiator. To this polyether polyol or polyether monool, the alkylene oxide and the like are subjected to the ring-opening addition polymerization, whereby a desired polyether is obtained. The polyether monool or polyether polyol to be used for such a purpose is preferably one having from 1 to 8 hydroxy groups and having a number average molecular weight (Mn) of from 300 to 5,000, whereby the catalytic activity of the DMC catalyst will be high, and the viscosity of the slurry-form DMC catalyst will not be high, whereby the handling will be easy.

### (Initiator)

The initiator having a hydroxy group to be used for the production process of the present invention is not particularly limited so long as it is an initiator usually employed for production of the polyether as mentioned above. The initiator preferably has from 1 to 12 hydroxy groups on average per one molecule, more preferably from 1 to 8, further preferably from 1 to 6.

The initiator is a compound having a molecular weight lower than the polyether to be produced, and is preferably a compound having a number average molecular weight (Mn) of from 18 to 20,000. More preferably, it is a compound having a number average molecular weight (Mn) per hydroxy group of from 50 to 1,500.

When the initiator has 2 or more hydroxy groups on average, particularly it is preferred to use an initiator having a number average molecular weight (Mn) per hydroxy group of from 100 to 500, more preferably from 200 to 400, whereby the time until initiation of the polymerization reaction can be shortened.

Such an initiator can be obtained by subjecting an alkylene oxide such as ethylene oxide or propylene oxide to ring-opening addition polymerization to a polyhydric alcohol, a monoalcohol, a polyhydric phenol, a monophenol, or another active hydrogen-containing compound to which the alkylene oxide is capable of ring-opening addition reaction, by using an alkali catalyst or the like, followed by purification such as removal of the catalyst. As the case requires, after removal of the catalyst, an antioxidant such as a hindered phenol may be added.

Further, polytetramethylene glycol (PTMG) which is a polymer of tetrahydrofuran (hereinafter sometimes referred to as "THF"), a polyester diol which is a copolymer of an aliphatic diol such as 1,4-butanediol, methylpentanediol or nonanediol with an aliphatic dicarboxylic acid such as adipic acid, a polybutadiene having a hydroxy group terminal, a polyalkene polyol or monool such as a hydroxy group-containing polyisoprene, or a polyolefin polyol or monool such as a hydrogenated product of the polyalkene polyol or monool, or a compound such as a hydroxy group-containing polycarbonate, each having an average number of hydroxy groups and a number average molecular weight (Mn) within the above ranges, may also be used as the initiator in the production process of the present invention.

The active hydrogen-containing compound to be used for preparation of the initiator by the ring-opening addition reaction of the alkylene oxide, may be a compound having active hydrogen other than a hydroxy group such as an amine. It is preferably a compound having a hydroxy group, preferably a polyhydric alcohol, a monoalcohol, a polyhydric phenol, a monophenol or the like. Specifically, it may, for example, be a monovalent alcohol such as methanol, ethanol, 2-propanol, n-butanol, iso-butanol, 2-ethylhexanol, n-octanol, decyl alcohol, lauryl alcohol, tridecanol, cetyl alcohol, stearyl alcohol or oleyl alcohol; a dihydric alcohol such as ethylene glycol, diethylene glycol, 1,2-propanediol, dipropylene glycol, 1,3-propanediol, 1,4-cyclohexanediol, 1,3-butanediol, 1,4-butanediol, 1,6-hexanediol or neopentyl glycol; a polyhydric alcohol of trihydric or higher such as glycerol, diglycerol, trimethylolpropane, pentaerythritol, dipentaerythritol or tripentaerythritol; a monosaccharide, a polysaccharide or a derivative thereof such as glucose, maltose, sorbitol, fructose, sucrose, trehalose, methylglucoside, chitin, chitosan or lignin; a polymer of vinyl alcohol such as polyvinyl alcohol; a phenol such as phenol, nonylphenol, octylphenol, bisphenol A, bisphenol F, bisphenol S, styrenated phenol, distyrenated phenol, tristyrenated phenol, novolac, resol, resorcine or lignin, and a derivative thereof; and a hydroxy group-containing triglyceride or a derivative thereof, such as castor oil, hardened castor oil or hydrogenated soybean oil. These active hydrogen-containing compounds may be used alone or in combination of two or more.

The alkylene oxide is subjected to ring-opening addition polymerization to the above active hydrogen compound in the presence of a catalyst to obtain the polyether polyol or polyether monool to be used as the initiator. The catalyst to be used for preparation of the initiator may be an alkali metal compound catalyst, a cationic polymerization catalyst or the like unless the molecular weight of the desired initiator is particularly high, and an alkali metal compound catalyst is particularly preferred. In a case where an initiator having a relatively high molecular weight is used, a double metal cyanide complex catalyst, a metal porphyrin catalyst or a phosphazenium compound catalyst may be used.

Further, the initiator to be used in the present invention may preliminarily contain, as the material, a hindered phenol type, hindered amine type, phosphoric acid type or sulfur type antioxidant, a thermal stabilizer such as phosphite, an ultraviolet absorber, an organic or inorganic antistatic agent, or various stabilizers such as a plasticizer such as dioctyl phthalate, an organic or inorganic acid such as phosphoric acid, hydrochloric acid, sulfuric acid, nitric acid, lactic acid, acetic acid or carboxylic acid, or a basic material such as sodium hydroxide, potassium hydroxide, lithium hydroxide, calcium hydroxide, barium hydroxide, sodium carbonate or lithium carbonate, and they may optionally be added before preparation. However, with respect to the presence of an organic carboxylic acid, its concentration is preferably at most 5 mgKOH/g as calculated as acid value in the initiator. With respect to the alkali, preferred is such a concentration that the pH of the initiator is at most 8. Further, if the pH exceeds 8, the pH may be adjusted by the above acid.

### (Alkylene oxide and the like)

In the present invention, the compound to be subjected to ring-opening addition polymerization to the initiator is the alkylene oxide and the like. The alkylene oxide and the like are, as described above, the alkylene oxide and the oxygen-containing heterocyclic compound other than an alkylene oxide. The oxygen-containing heterocyclic compound is a compound having a ring constituted by at least two carbon atoms and at least one oxygen atom, i.e. an oxygen-containing heterocyclic ring, and may, for example, be a cyclic ether, a carboxylic anhydride, a cyclic ester or a cyclic carbonate. The alkylene oxide is one type of cyclic ethers. The cyclic ether other than an alkylene oxide may, for example, be a substituent-containing alkylene oxide having a substituent other than the alkyl group on the carbon atom in the ring, a 4- or more-membered cyclic ether such as tetrahydrofuran (THF) or oxetane, or a 4- or more-membered cyclic ether having a substituent on the carbon atom in the ring.

In the present invention, the alkylene oxide is a compound having an unsaturated group of a monoalkene epoxidized, and its number of carbon atoms is preferably at most 20, particularly preferably at most 6. Specifically, the alkylene oxide may, for example, be ethylene oxide, propylene oxide, 1,2-butene oxide, 2,3-butene oxide or an epoxidized product of C₅₋₁₂ α-olefin. Two or more types of the alkylene oxides may be reacted with the initiator, and in the case of two or more types, a mixture thereof may be reacted, or they may separately be reacted.

The alkylene oxide to be used in the production process of the present invention is particularly preferably ethylene oxide or propylene oxide. Ethylene oxide and propylene oxide may be reacted alone, a mixture thereof may be reacted, or they may separately be reacted.

In the production process of the present invention, a method of using the alkylene oxide and the oxygen-containing heterocyclic compound other than an alkylene oxide in combination may, be specifically a method of reacting a mixture of the alkylene oxide and the oxygen-containing heterocyclic compound other than an alkylene oxide with the initiator, or a method of separately reacting them. In a case where the oxygen-containing heterocyclic compound other than an alkylene oxide is a compound (e.g. carboxylic anhydride) which hardly undergoes ring-opening addition polymerization by itself, it is preferably used as mixed with an alkylene oxide. As the oxygen-containing heterocyclic compound other than an alkylene oxide, specifically, the following compounds may be mentioned. Further, the oxygen-containing heterocyclic compounds other than an alkylene oxide may be used alone or in combination of two or more.

### [Substituent-containing alkylene oxide having substituent other than alkyl group on carbon atom in ring]

Epichlorohydrin, glycidol; glycidyl ethers such as methyl glycidyl ether, butyl glycidyl ether, phenyl glycidyl ether, allyl glycidyl ether, stearyl glycidyl ether and glycidyl methacrylate; glycidyl esters, and the like. Among them, butyl glycidyl ether, allyl glycidyl ether or stearyl glycidyl ether is preferred, and allyl glycidyl ether is more preferred.

### [4- or more-membered cyclic ether and substitution product thereof]

Oxetane, tetrahydrofuran, tetrahydropyran, 2-methyltetrahydrofuran, 3-methyltetrahydrofuran, and the like.

### [Carboxylic anhydride]

As the carboxylic acid anhydride, a dicarboxylic anhydride is preferred. Specifically, the following compounds may be mentioned.

Aliphatic dicarboxylic anhydrides such as maleic anhydride, succinic anhydride, dodecenyl succinic anhydride and octadecenyl succinic anhydride, aromatic dicarboxylic anhydrides such as phthalic anhydride, and alicyclic dicarboxylic anhydrides such as tetrahydrophthalic anhydride, 3-methyl-hexahydrophthalic anhydride, 4-methyl-hexahydrophthalic anhydride, 3-methyl-1,2,3,6-tetrahydrophthalic anhydride and 4-methyl-1,2,3,6-tetrahydrophthalic anhydride. Among them, maleic anhydride, phthalic anhydride or tetrahydrophthalic anhydride is preferred, and phthalic anhydride or tetrahydrophthalic anhydride is more preferred.

### [Cyclic ester]

The cyclic ester is preferably a C₃₋₉ cyclic ester compound, i.e. a lactone.

The cyclic ester compound may, for example, be β-propiolactone, γ-butyrolactone, δ-valerolactone, ε-caprolactone, methyl-ε-caprolactone, α-methyl-β-propiolactone, β-methyl-β-propiolactone, methoxy-ε-caprolactone or ethoxy-ε-caprolactone. Among them, ε-caprolactone, δ-valerolactone or γ-butyrolactone is preferred, and ε-caprolactone is more preferred.

### [Cyclic carbonate]

Polymerization of the polyether polycarbonate polyol may be carried out by copolymerizing the above-described alkylene oxide and carbon dioxide, or ethylene carbonate or propylene carbonate. The alkylene oxide used in such a case is preferably propylene oxide, 1,2-buteneoxide or 2,3-buteneoxide.

### (Other additives)

To the polyether obtained by the production process of the present invention, to prevent deterioration during a long term storage until its use, additives selected from a hindered phenol type or hindered amine type antioxidant, a benzotriazole non-ferrous antiocorrosive, a triazole type or benzophenone type ultraviolet absorber, a boron compound type reducing agent and the like may be added.

In addition, a compound selected from a mineral acid such as phosphoric acid, phosphorous acid, hypophosphorous acid, pyrophosphoric acid, hydrochloric acid, sulfuric acid and sulfurous acid; an organic acid such as formic acid, oxalic acid, succinic acid, acetic acid, maleic acid, benzoic acid, p-toluenesulfonic acid and dodecylbenzene sulfonic acid; an alkali metal hydroxide or an alkaline earth metal hydroxide such as sodium hydroxide, potassium hydroxide, lithium hydroxide, rubidium hydroxide, cesium hydroxide, magnesium hydroxide, calcium hydroxide, strontium hydroxide and barium hydroxide; an alkali metal carbonate or an alkaline earth metal carbonate such as lithium carbonate, sodium carbonate, potassium carbonate, rubidium carbonate, cesium carbonate, magnesium carbonate, calcium carbonate and barium carbonate; a hydrogencarbonate of an alkali metal or an alkaline earth metal hydrogencarbonate such as lithium hydrogencarbonate, potassium hydrogencarbonate, sodium hydrogencarbonate and cesium hydrogencarbonate; a phosphate such as lithium dihydrogenphosphate, sodium dihydrogenphosphate, potassium dihydrogenphosphate, lithium monohydrogenphosphate, sodium monohydrogenphosphate, potassium monohydrogenphosphate and acidic sodium pyrophosphate; a hydrogen sulfate such as lithium hydrogen sulfate, sodium hydrogen sulfate and potassium hydrogen sulfate; an aliphatic amine such as ethylenediamine, diethylenetriamine and hexamethylenediamine; an aromatic amine such as tolylenediamine and diphenylmethanediamine; and an organic alkaline compound such as an alkanolamine, may be added to adjust the pH.

### <Process for producing polyether>

The process for producing a polyether of the present invention is a process for producing a polyether by using the above-described DMC catalyst and the material compounds, and subjecting the alkylene oxide and the like to ring-opening addition polymerization to the initiator in the presence of the DMC catalyst, and is characterized by carrying out a specific pretreatment by mixing the DMC catalyst and the initiator, prior to the ring-opening addition polymerization. This specific pretreatment will hereinafter be referred to as a step (a), and the following ring-opening addition polymerization will be referred to as a step (b).
(a) A mixing treatment step of mixing a mixture containing the DMC catalyst and the initiator at a temperature of from 125°C to 180°C under an absolute pressure of at most 0.06 MPa for from 10 minutes to 24 hours (hereinafter sometimes referred to as "a DMC catalyst pretreatment step").
(b) A step of adding the alkylene oxide and the like to the mixture containing the DMC catalyst and the initiator after the step (a) and subjecting the alkylene oxide and the like to the ring-opening addition polymerization to the initiator thereby to form a polyether (hereinafter sometimes referred to as "a ring-opening addition polymerization step").
(a) DMC catalyst pretreatment step

In the production process of the present invention, (a) the DMC catalyst pretreatment step is a step of subjecting the DMC catalyst and the initiator to mixing treatment at a temperature of from 125°C to 180°C under an absolute pressure of at most 0.06 MPa for from 10 minutes to 24 hours, prior to the following (b) ring-opening addition polymerization step.

By pretreating the DMC catalyst under the above conditions, a DMC catalyst having a high catalytic activity for production of a polyether can be obtained. It is considered that the DMC catalyst which is solid is formed to have micropores, or the like, by the pretreatment, whereby the active sites on the catalyst surface per unit amount is increased, and the catalytic activity is increased.

With the DMC catalyst subjected to pretreatment, which has high catalytic activity, a polyether can be produced by use of a small amount, and the amount of the DMC catalyst remaining the polyether to be obtained is very small. Such is advantageous in that a catalyst removal step which is essential if another alkali metal compound catalyst or the like is used, is unnecessary, and in that the long term storage stability of the polyether will be good. In addition, when a polyurethane resin is produced by using the obtained polyether, the remaining DMC catalyst is small, whereby the reaction of the polyether with the polyisocyanate compound will not be inhibited, whereby a favorable polyurethane resin can be produced.

Further, the molecular weight distribution of the polyether to be obtained is narrow. It is considered that prior to the ring-opening addition polymerization, the DMC catalyst and the initiator are sufficiently mixed, and the ring-opening addition polymerization is conducted in a reaction system in which the DMC catalyst having a high catalytic activity together with the initiator is uniformly present, whereby the molecular weight distribution is narrow. When the molecular weight distribution is narrow, the high molecular weight product tends to be small, whereby the viscosity of the polyether to be obtained will be low, thus leading to good handling efficiency.

Further, by the above pretreatment method of treating the catalyst at a temperature higher than that of conventional DMC catalyst pretreatment, impurities in the catalyst can be removed more efficiently in a short time.

### (a-1) DMC catalyst concentration in pretreatment step

In the step (a) in the production process of the present invention, first, the above-described DMC catalyst and initiator are properly selected depending on the polyether to be produced, and predetermined amounts are put in a container (hereinafter sometimes referred to as "a reactor", the detail will be described hereinafter, and usually (b) the ring-opening addition polymerization step is continuously conducted using the same container) for mixing treatment. The order of putting may be any of (i) the DMC catalyst and the initiator are put at the same time, (ii) the initiator is put first and then the DMC catalyst is added, and (iii) the DMC catalyst is put first and then the initiator is added, however, as the DMC catalyst is solid, it may fly in the reactor by components added later, and thus (i) or (ii) is preferred. In a case where there is a component which may added to the initiator, (ii) is preferably selected. The initiator and the component which may be added can be preliminarily mixed in the reactor, followed by treatment such as dehydration as the case requires. The component which may be added to the initiator may be an acid such as phosphoric acid or a stabilizer such as dibutylhydroxytoluene (hereinafter referred to as BHT). The DMC catalyst may be put as the slurry-form DMC catalyst.

The amount of the DMC catalyst to be used in the production process of the present invention is such an amount that the concentration (hereinafter sometimes referred to as "the DMC catalyst concentration") based on the amount of the initiator is preferably from 10 to 200 ppm, more preferably from 10 to 150 ppm. When the amount is at least 10 ppm as the concentration based on the initiator, (b) the ring-opening addition polymerization can be carried out efficiently. When it is at most 200 ppm, the amount of the DMC catalyst remaining in the polyether to be obtained will be small, whereby treatment such as its removal is unnecessary.

In this specification, the DMC catalyst concentration is, in a case where the DMC catalyst has a ligand, for example, it is a compound represented by the above formula (1), the DMC catalyst concentration calculated by employing the amount of the entire compound including the ligand as the amount of the DMC catalyst. Further, in a case where the slurry-form DMC catalyst is used, it is the DMC catalyst concentration calculated by employing the amount of the DMC catalyst contained in the slurry-form DMC catalyst as the amount of the DMC catalyst. Further, the polyether polyol and/or the polyether monool as the dispersion medium in the slurry-form DMC catalyst behaves as part of the initiator in the after-mentioned ring-opening addition polymerization, however, as the amount used as the dispersion medium is very small, the amount of such a dispersion medium is not included as the amount of the initiator when calculating the DMC catalyst concentration.

In the production process of the present invention, the amount (concentration) of use of the DMC catalyst is an amount which is made possible by the catalytic activity increased by the above step (a), and is a small amount as compared with the amount (concentration) of use of the DMC catalyst in the conventional process for producing a polyether. As described above, according to the production process of the present invention, even with a small amount (concentration) of from 10 to 200 ppm as the amount (concentration) based on the initiator, as compared with a conventional process, the DMC catalyst can sufficiently function in (b) the ring-opening addition polymerization step.

Further, the amount of the DMC catalyst used in the production process of the present invention is preferably from 1 to 80 ppm, more preferably from 1 to 50 ppm, further preferably from 1 to 20 ppm, as the amount of the remaining DMC catalyst based on the entire amount of the polyether to be obtained. A remaining amount of at most 80 ppm is advantageous in that the catalyst removal step is unnecessary, and in that the polyether will have good storage stability. In addition, when a polyurethane resin is produced, the remaining DMC catalyst will not inhibit the reaction of the polyether with the polyisocyanate compound, whereby a favorable polyurethane resin can be produced.

The amount of the remaining DMC catalyst based on the entire amount of the polyether to be obtained is an amount calculated by the amount of the catalyst put/(the amount of the initiator put+the amount of the catalyst put+the amount of the alkylene oxide and the like put).

The remaining DMC catalyst remains in the formed polyether as an alkali neutralized salt, an acid or the like. The amount of the remaining metal (for example, Zn or Co) derived from the DMC catalyst is reduced to preferably from 1 to 30 ppm, more preferably from 1 to 20 ppm, further preferably from 1 to 10 ppm.

### (a-2) Mixing treatment conditions

In the step (a) in the production process of the present invention, the DMC catalyst and the initiator are prepared so as to achieve the DMC catalyst concentration described in the above (a-1), and they are subjected to mixing treatment under the following mixing treatment conditions, specifically, the temperature, the pressure, the treatment time, the atmospheric gas, the reactor and the stirring means.

In the present invention, the temperature at which the mixing treatment is carried out is from 125°C to 180°C. This mixing treatment temperature is more preferably from 130°C to 160°C. When the temperature at which the mixing treatment is carried out is at least 125°C, the catalyst will sufficiently be dispersed, whereby the catalytic activity will be high. Further, when it is at most 180°C, the DMC catalyst and the initiator will not be decomposed.

In the present invention, the pressure under which the mixing treatment is carried out is preferably at most 0.06 MPa by the absolute pressure. The pressure at the time of the mixing treatment is preferably at most 0.004 MPa by the absolute pressure, more preferably at most 0.001 MPa by the absolute pressure. If it is at most 0.004 MPa, it is considered that the higher the degree of vacuum, the more the affinity between the DMC catalyst and the hydroxy group in the initiator will be improved along with the removal of moisture contained in the initiator. When it is at most 0.06 MPa, the affinity between the DMC catalyst and the hydroxy group in the initiator will be sufficient. The evacuation of the pressure does not lead to an effect of improving the activity of the catalyst, but may be carried out if necessary in the process if the moisture content in the initiator is too high.

In the present invention, the time over which the mixing treatment is carried out is from 10 minutes to 24 hours. The mixing treatment time is preferably from 15 minutes to 2 hours. When it is at least 10 minutes, the affinity between the DMC catalyst and the hydroxy group in the initiator will be sufficient. When it is at most 24 hours, such is efficient in view of the time.

In the present invention, the atmospheric gas in which the mixing treatment is carried out is preferably inert gas, specifically nitrogen or rare gas to prevent side-reaction of the alkylene oxide and the like.

In the present invention, the shape and the material of the reactor used for the mixing treatment are not particularly limited, but as the material, preferred is a container made of heat resistant glass or a metal.

In the production process of the present invention, "mixing" of the initiator and the DMC catalyst means a state where both are uniformly mixed as a whole, and the mixing treatment means a treatment to bring them in such a "mixed" state. In the present invention, the mixing means when the mixing treatment is carried out is not particularly limited so long as the DMC catalyst and the initiator (including components added as the case requires) can be sufficiently mixed. The mixing means is usually stirring means. The stirring power of the stirring means is preferably from 4 to 500 kW/m³, more preferably from 8 to 500 kW/m³, further preferably from 12 to 500 kW/m³. Here, the stirring power is a value calculated from a known value, and this value is a power requirement per unit liquid amount of the content, calculated from the volume and the viscosity of the content in the reactor, the shape of the reactor, the shape and the number of revolutions of the stirring vanes, etc. A preferred stirring power in the present invention is a value to the mixture in the reactor.

Further, as stirring means, specifically, stirring by stirring vanes, by bubbling by inert gas such as nitrogen gas, by electromagnetic waves or ultrasonic waves, or the like may be mentioned, and stirring by the stirring vanes is preferred. As a preferred example of the stirring vanes, the stirring vanes disclosed in JP-A-2003-342361 may be mentioned. The stirring vanes are particularly preferably large-scaled vanes, and the large-scaled vanes such as FULLZONE (registered trademark) vanes manufactured by Shinko Pantec Co., Ltd., or MAXBLEND (registered trademark) vanes manufactured by Sumitomo Heavy Industries, Ltd. may be mentioned. Further, paddle vanes, pitched paddle vanes, turbine vanes and propeller vanes may, for example, be used, and at that time, the radius of the stirring vanes is in a range of preferably from 20 to 99%, more preferably from 30 to 90%, particularly preferably from 40 to 80% to the inner diameter of the reactor. The larger the radius of the stirring vane becomes, the larger the shearing stress becomes, and therefore the chance of contact of the viscous liquid (initiator) and the powdery particles (the DMC catalyst) will be increased. Accordingly, (a) the DMC catalyst pretreatment step in the production process of the present invention is carried out preferably in a reactor equipped with stirring means having a large radius of stirring vanes.

However, in a case where the viscosity of the initiator is low, the initiator and the DMC catalyst may be subjected to mixing treatment as contacted by a thin membrane distiller without stirring vanes. Further, similarly, stirring by pump circulation such as a loop reactor may be carried out. In such a case, the stirring power is replaced by the pump discharge flow amount. By the above stirring step, the DMC catalyst will sufficiently be dispersed, whereby the catalytic activity of the DMC catalyst can be increased.

### (b) Ring-opening addition polymerization step

(b) The ring-opening addition polymerization step in the production process of the present invention is a step of adding the alkylene oxide and the like to the mixture containing the DMC catalyst and the initiator after the above step (a) to subject the alkylene oxide and the like to addition polymerization to the initiator thereby to form a polyether.

Further, in the reaction employing the DMC catalyst, it is preferred to provide an induction period to activate the catalyst. Specifically, it is preferred that a small amount of the alkylene oxide and the like are introduced to the reaction system before the alkylene oxide and the like are reacted, to activate the DMC catalyst, and then the remaining alkylene oxide and the like are introduced to the reaction system to subject them to the ring-opening addition polymerization. Further, the alkylene oxide and the like used to activate the catalyst undergo the ring-opening addition polymerization to the initiator.

The step (b) in the production process of the present invention may be carried out by a known method in a process for producing a polyether by subjecting the alkylene oxide and the like to ring-opening addition polymerization to the initiator in the presence of the DMC catalyst, except that the mixture containing the DMC catalyst and the initiator after the above step (a) is used as the DMC catalyst and the initiator.

### (b-1) Method of putting alkylene oxide and the like

With respect to the alkylene oxide and the like to be added in the step (b), predetermined amounts of the above-described compounds may be used.

As the method of putting the alkylene oxide and the like to the mixture containing the DMC catalyst and the initiator after the above step (a), they may successively be added, or the entire amount may be added all at once. As the method of successive addition, they may be added at a constant rate, or they may be added while the pressure in the reactor is kept constant.

In the production process of the present invention, the alkylene oxide and the oxygen-containing heterocyclic compound other than an alkylene oxide are used in combination, that is, two or more types of the alkylene oxide and the like are used in combination, and as the polymerization method, either polymerization of block polymerization and random copolymerization may be employed, and further, both of the block copolymerization and the random copolymerization may be combined.

That is, two or more types of the alkylene oxide and the like are added at the same time to the mixture containing the DMC catalyst and the initiator after the above step (a) to carry out polymerization, a random copolymer of a poly(mono)ether can be obtained (random copolymerization). When two or more types of the alkylene oxide and the like are successively added to the mixture containing the DMC catalyst and the initiator after the above step (a), a block copolymer of a poly(mono)ether ester polyol can be obtained (block copolymerization). By adjusting the order of addition, the addition amount or the like to the mixture containing the DMC catalyst and the initiator after the step (a), a polyester chain moiety and/or a polyoxyalkylene chain moiety may be introduced to a part in the molecule, to obtain a polyether in which the random copolymerization moiety and the block copolymerization moiety are present in one molecule (random/block copolymerization). When the alkylene oxide and a carboxylic anhydride are used, polymerization of only the carboxylic anhydride will not proceed, and thus an alternate polymer chain of the alkylene oxide and the carboxylic anhydride will form, or an alternate polymer chain of the block polymer moiety of the alkylene oxide and the carboxylic anhydride will form.

Further, the rate of supply of the alkylene oxide and the like in the step (b) is preferably as low as possible, whereby the molecular weight distribution of the polymer to be obtained can be made narrow, however, such lowers the production efficiency, and accordingly the supply rate is preferably set balancing them. A specific supply rate is preferably within a range of from 0.01 to 100 mass%/h to the entire mass of the polyether assumed as the final product. Further, successive change of the supply rate during the polymerization reaction is also within the scope of the present invention.

### (b-2) Solvent to be used for ring-opening addition polymerization

As the solvent to be used for the step (b) in the production process of the present invention, a solvent which will not adversely affect the polymerization reaction can be used. As a specific solvent, preferred is an organic solvent containing no functional group reactive with the oxygen-containing heterocyclic compound, such as hexane, cyclohexane, benzene or methyl ethyl ketone. The time of adding the solvent is preferably after the above step (a) and before introduction of the alkylene oxide and the like in the step (b). Use of the solvent is optional. When no reaction solvent is used, the solvent removal step from the polyether as the final product is unnecessary, thus increasing the productivity. Further, the catalytic activity of the DMC catalyst is decreased in some cases due to influences of the moisture or the antioxidant contained in the solvent, and such disadvantages can be prevented by using no solvent.

### (b-3) Ring-opening addition polymerization conditions

In the step (b) of the production process of the present invention, the alkylene oxide and the like are put by the method described in the above (b-1), and the solvent is introduced by the method as described in (b-2), followed by ring-opening addition polymerization under the following respective conditions of the temperature, the pressure, the reactor, the stirring means, and the like.

In the step (b) of the production process of the present invention, the ring-opening addition polymerization reaction temperature is preferably from 50°C to 180°C, more preferably from 80°C to 160°C, further preferably from 120°C to 150°C. When the addition polymerization temperature is at least 50°C, the alkylene oxide and the like can be reacted with good efficiency, and the amount of unreacted compounds contained in the polyether as the final product can be made small, and in addition, a polyether having a desired monomer composition can be obtained. Further, when the ring-opening addition polymerization temperature is at most 180°C, the activity of the DMC catalyst can be maintained high, unreacted alkylene oxide and the like can be prevented, and in addition, the molecular weight distribution of the polyether can be made narrow.

Further, the reaction initiation temperature is preferably from 125°C to 160°C. Once the ring-opening addition polymerization starts, the temperature in the reactor is increased by the heat of reaction. The above ring-opening addition polymerization temperature is a temperature when the reaction started and the temperature in the reactor is increased and becomes constant.

In the step (b) in the production process of the present invention, as the pressure at the initiation of the reaction and during the reaction, the reaction may be started from normal pressure, may be started under reduced pressure by removing the gas in the reactor such as nitrogen gas, or may be started in a pressurized state by adding nitrogen gas on the contrary. The pressure during the reaction may be elevated pressure, or may be kept under normal pressure or a slightly elevated pressure of at most 0.01 MPa by using an unreacted monomer removal and recovery apparatus.

As the reactor used in the step (b) in the production process of the present invention, a pressure resistant autoclave container is preferably used, but in a case where the boiling point of the alkylene oxide and the like is high, it may not be pressure resistant. The material is not particularly limited. Further, as the reactor, the container used in the above step (a) may be used as it is.

In the step (b) in the production process of the present invention, at the time of the reaction of the initiator with the alkylene oxide and the like in the presence of the DMC catalyst, the reaction liquid is stirred by means of a stirring power of from 4 to 500 kW/m³, preferably from 8 to 500 kW/m³, more preferably from 12 to 500 kW/m³, in the same manner as the above (a) DMC catalyst pretreatment step. As the stirring vanes, propeller vanes, paddle vanes, MAXBLEND vanes or disk turbine vanes may be used, and large-scaled vanes are preferred to uniformly mix the content in the reactor. Further, a disper, a homomixer, a colloid mill, a Nauta mixer or the like used for emulsification or dispersion may also be used. Further, mixing by ultrasonic waves may be employed without using the stirring vanes. Such stirring methods may be combined. In a case where a common stirring method of using the stirring vanes is employed, the speed of revolution of the stirring vanes is preferably as high as possible within a range where a large amount of gas of the vapor phase in the reactor is not included in the reaction liquid, thus leading to a decrease in the stirring efficiency.

In the step (b) of the present invention, the polymerization reaction method is preferably a batch method, however, a continuous method may also be employed wherein addition of the alkylene oxide and the like and the mixture containing the DMC catalyst and the initiator after the above step (a) and withdrawal of the polyether as the product are carried out simultaneously. Particularly when the average molecular weight per one hydroxy group of the initiator is at most 300, the continuation method is preferred.

Further, the polyether poly(mono)ol obtained by the process for producing a polyether of the present invention may be subjected to the DMC catalyst removal treatment or the DMC catalyst deactivation treatment as the case requires. The method may, for example, be an adsorption method using an adsorbent selected from synthetic silicate (such as magnesium silicate or aluminum silicate), an ion exchange resin and activated white earth, a neutralization method by an amine, an alkali metal hydroxide, phosphoric acid, an organic acid or its salt such as lactic acid, succinic acid, adipic acid or acetic acid, or an inorganic acid such as sulfuric acid, nitric acid or hydrochloric acid, or a combination of the neutralization method and the adsorption method.

The polyether obtainable by the production process of the present invention has a narrow molecular weight distribution without an increase in the remaining DMC catalyst concentration at the time of finish, and has a low viscosity, and is thereby excellent in the handling efficiency. Further, this polyether is very useful to form various polyurethane resins by reaction with a polyisocyanate compound and optionally a chain extender. The specific applications include an adhesive, a pressure-sensitive adhesive and a sealant. Further, it is also useful as a material for a urethane foam such as an automobile seat or an insulating material for building. Further, in addition to the urethane resin, it may also be used as e.g. a material of a lubricating oil such as a base oil for grease, an oil for vehicles, a machine oil or a modified oil, a surfactant, a diluting agent, a plasticizer, a modifier or a viscosity index improving agent.

The polyether obtained by the production process of the present invention is particularly suitably used as a material for production of a polyurethane resin, and it is described herein a polyurethane resin obtainable by reacting the polyether obtained by the above production process of the present invention with a polyisocyanate compound. The polyurethane resin described herein can be produced from a known material (polyisocyanate compound) by a known method, except that the polyether obtained by the production process of the present invention is used. As the DMC catalyst concentration which adversely affects the control of the reactivity at the production of the polyurethane resin can be suppressed low, a urethane prepolymer intermediate excellent in the stability with time can be provided even without carrying out a step of purifying the polyether.

### EXAMPLES

Now, the present invention will be described in further detail with reference to Examples and Comparative Examples. However, the present invention is not limited to such specific Examples.

### [Measurement methods]

Physical properties of the respective compounds in the following Examples and Comparative Examples were measured by the following methods.

### (1) Viscosity

The viscosity at 25°C was measured in accordance with JIS K1557 by using a type E viscometer VISCONIC EHD model (manufactured by TOKIMEC INC.) and by using No. 1 rotor.

### (2) Number average molecular weight (Mn) and mass average molecular weight (Mw)

Of the polymers such as the polyester ether poly(mono)ol, the number average molecular weight (Mn), the mass average molecular weight (Mw) and the molecular weight distribution (Mw/Mn) were molecular weights as calculated as polystyrene, obtained by measurement by gel permeation chromatography (GPC) under the following conditions by using a calibration curve prepared by using a standard polystyrene having a known molecular weight.

### (GPC measurement conditions)

Machine used: HLC-8220GPC (manufactured by Tosoh Corporation)
Data processing apparatus: SC-8020 (manufactured by Tosoh Corporation)
Column used: TSG gel G2500H (manufactured by Tosoh Corporation)
Column temperature: 40°C, detector: RI, solvent: tetrahydrofuran, flow rate: 0.6
ml/min, sample concentration: 0.25%, amount injected: 10 µl
Standard sample for preparation of calibration curve: Polystyrene (manufactured by Polymer Laboratories, [EasiCal] PS-2 [Polystyrene Standards])

### (3) Hydroxy value, average molecular weight

Measured in accordance with JIS K1557. The average molecular weight of the poly(mono)ol compound is an average molecular weight calculated from the hydroxy value by the following formula. The average molecular weight calculated from the hydroxy value is a value calculated by employing the following formula from the hydroxy value (OHV, unit: mgKOH/g) and the average number x of hydroxy groups of the initiator used for production of the poly(mono)ol compound.
Average molecular weight=(56,100/OHV)x(x)

Further, the materials used in the following Examples and Comparative Examples are as follows.

### [DMC catalyst]

A DMC catalyst (1) with a tert-butyl alcohol (hereinafter referred to as "TBA" as the case requires) ligand of the above formula (1) wherein M¹ and M³ are Zn, M² is Co, X is CI, L is TBA, a=3, b=1, c=6, d=2, e=1.8, f=1, g=2, h=15, and i=11, was used.

### [Initiator]

The respective compounds (commercial products) the physical properties of which are shown in Table 1 were respectively used as the initiator (a1), the initiator (a2) and the initiator (a3).

**TABLE 1**

| Initiator | Compound as initiator | Tradename (manufacturer) | Average number of hydroxy groups per one molecule | Average molecular weight (as calculated as hydroxy value) | Number average molecular weight (Mn) | Mass average molecular weight (Mw) | Molecular weight distribution (Mw/Mn) | Viscosity (25°C) (mPa·s) |
|---|---|---|---|---|---|---|---|---|
| a1 | Polytetramethylene glycol | Poly THF1000 (manufactured by BASF) | 2 | 1014 | 1038 | 1842 | 1.775 | - |
| a2 | Polypropylene glycol | EXCENOL 720 (manufactured by Asahi Glass Company, Limited) | 2 | 700 | 701 | 740 | 1.056 | 100 |
| a3 | Polyethylene glycol | Polyethylene glycol 400 (manufactured by Lion Corporation) | 2 | 400 | 398 | 426 | 1.070 | - |

### (Example 1)

### (DMC catalyst pretreatment)

In a 5L autoclave equipped with a paddle vane (the radius of the paddle vanes is 50% of the inner diameter of the reactor) stirring apparatus, 1,000 g of the initiator (a1) the physical properties of which are shown in Table 1, and then 0.06 g of the DMC catalyst (1) with TBA ligand were added and heated to 140°C, followed by mixing treatment under a reduced pressure of 0.001 MPa under stirring conditions of 200 rpm (stirring power>12 kW/m³) for 1 hour.

### (Ring-opening addition polymerization)

After completion of the above pretreatment, the pressure in the autoclave was elevated to 0.03 MPa by nitrogen gas, and 100 g of a 1/1 (mass ratio) mixture of ethylene oxide (hereinafter sometimes referred to as "EO") and ε-caprolactone (manufactured by Daicel Corporation, PLACCEL M: tradename) for initial activation was fed at 130°C. After the initial activation by a decrease in the internal pressure was confirmed, 1,900 g of a 1/1 (mass ratio) mixture of EO and ε-caprolactone was fed over a period of 4 hours. After an aging time for 2 hours, it was confirmed that there was no unreacted EO or ε-caprolactone by vacuum treatment. Then, 0.6 g of dibutylhydroxytoluene (BHT) as an antioxidant and 0.001 g of phosphoric acid for pH adjustment were added, and then an ethylene oxide/ε-caprolactone copolymer of polytetramethylene glycol as a product was taken out.

Of the taken out formed product, the physical properties were measured by the above measurement methods. The measurement results are shown in Table 2.

### (Examples 2 and 3)

A polyether polyol was produced in the same manner as in Example 1 except that the pressure at the mixing treatment was changed as identified in Table 2. Of the obtained polyether polyol, the physical properties were measured by the above measurement method. The measurement results are shown in Table 2.

### (Example 4)

### (DMC catalyst pretreatment)

In the same 5L autoclave as used in Example 1, 700 g of the initiator (a2) of which the physical properties are shown in Table 1 and then 0.1 g of the DMC catalyst (1) with TBA ligand were added and heated to 130°C, followed by mixing treatment under a reduced pressure of 0.001 MPa under stirring conditions of 200 rpm (stirring power>12 kW/m³) for 15 minutes.

### (Ring-opening addition polymerization)

After completion of the above pretreatment, the interior in the autoclave was cooled to 80°C, and the pressure in the autoclave was returned to normal pressure by nitrogen gas, and then 600 g of phthalic anhydride (manufactured by Kawasaki Kasei Chemicals, Ltd.) was added, followed by heating to 130°C, and 100 g of propylene oxide (hereinafter sometimes referred to as "PO") for initial activation was introduced. One hour later, a decrease in the internal pressure was confirmed, and then 600 g of PO was fed at 130°C over a period of 6 hours. After aging for 3 hours, 0.6 g of BHT as an antioxidant was added, and a phthalic anhydride/propylene oxide copolymer of polypropylene glycol as a formed product was taken out.

Of the taken out formed product, the physical properties were measured by the above measurement methods. The measurement results are shown in Table 2.

### (Examples 5 to 8)

A polyether polyol was produced in the same manner as in Example 4 except that the mixing treatment temperature or the mixing treatment time was changed as identified in Table 2. Of the obtained polyether polyol, the physical properties were measured by the above measurement methods. The measurement results are shown in Table 2.

### (Example 9)

### (DMC catalyst pretreatment)

Mixing treatment was carried out in the same manner as in Example 4 except that the mixing treatment temperature and the mixing treatment time were changed as identified in Table 2.

### (Ring-opening addition polymerization)

After completion of the above pretreatment, the interior in the autoclave was cooled to 80°C, the pressure in the autoclave was returned to normal pressure by nitrogen gas, followed by heating to 130°C, and 100 g of PO for initial activation was fed. One hour later, a decrease in the internal pressure was confirmed, and then 1,200 g of ε-caprolactone (manufactured by Daicel Corporation, PLACCEL M: tradename) was fed at 140°C over a period of 6 hours. After aging for 3 hours, 0.6 g of BHT as an antioxidant was added, and an ε-caprolactone adduct of polypropylene glycol as a formed product was taken out.

With respect to the taken out formed product, the physical properties were measured by the above measurement methods. The measurement results are shown in Table 2.

### (Example 10)

### (DMC catalyst pretreatment)

In the same 5L autoclave as used in the above Example 1, 800 g of the initiator (a3) the physical properties of which are shown in Table 1 and then 1.0 g of the DMC catalyst (1) with TBA ligand (active ingredient: 5 mass%) diluted with propylene glycol (Mw: 1,000, manufactured by Asahi Glass Company, Limited, EXCENOL 1020: tradename) were added and heated to 140°C, followed by mixing treatment under a reduced pressure of 0.001 MPa under stirring conditions of 200 rpm (stirring power>12 kW/m³) for 1 hours.

### (Ring-opening addition polymerization)

After completion of the above pretreatment, the pressure in the autoclave was elevated to normal pressure by nitrogen gas, and 50 g of a 1/1 (mass ratio) mixture of EO and ε-caprolactone (manufactured by Daicel Corporation, PLACCEL M: tradename) for initial activation was fed at 140°C. After the initial activation by a decrease in the internal pressure was confirmed, 3,150 g of a 1/1 (mass ratio) mixture of EO and ε-caprolactone was fed over a period of 4 hours. After an aging time for 2 hours, it was confirmed that there was no unreacted EO or ε-caprolactone by vacuum treatment. Then, 0.6 g of BHT as an antioxidant and 0.001 g of phosphoric acid for pH adjustment were added, and then an ethylene oxide/ε-caprolactone copolymer of polytetramethylene glycol as a product was taken out.

Of the taken out formed product, the physical properties were measured by the above measurement methods. The measurement results are shown in Table 2.

### (Comparative Example 1)

It was attempted to produce a polyether in the same manner as in Example 1 except that mixing treatment of the initiator and the DMC catalyst was not carried out.

In the same 5L autoclave as used in Example 1, 1,000 g of the initiator (a1) the physical properties of which are shown in Table 1 and then 0.06 g of the DMC catalyst (1) with TBA ligand were added. Then, the interior in the autoclave was replaced by nitrogen gas and the pressure was reduced to 0.03 MPa, and 100 g of a 1/1 (mass ratio) mixture of EO and ε-caprolactone for initial activation was fed at 130°C. After initial activation by a decrease in the internal pressure was confirmed, it was attempted to feed 1,900 g of a 1/1 (mass ratio) mixture of EO and ε-caprolactone, but the rate of consumption of EO and ε-caprolactone was decreased, the entire amount of the mixture could not be charged, and no desired product was obtained.

### (Comparative Example 2)

It was attempted to produce a polyether in the same manner as in Example 1 except that the mixing treatment pressure was changed as identified in Table 3. It was attempted to feed 1,900 g of a 1/1 (mass ratio) mixture of EO and ε-caprolactone, but the rate of consumption of EO and ε-caprolactone was decreased, the entire amount could not be charged, and no desired product was obtained.

### (Comparative Example 3)

A polyether was produced in the same manner as in Example 1 except for the initial concentration of the DMC catalyst and except that the mixing treatment of the initiator and the DMC catalyst was not carried out. Then, 0.6 g of BHT as an antioxidant and 0.001 g of phosphoric acid for pH adjustment were added, and then an ethylene oxide/ε-caprolactone copolymer of polytetramethylene glycol as a formed product was taken out.

Of the taken out formed product, the physical properties were measured by the above measurement methods. The measurement results are shown in Table 3.

### (Comparative Examples 4 to 6)

In Comparative Examples 4 to 6, it was attempted to produce a polyether in the same manner as in Example 4 except that the mixing treatment temperature or the mixing treatment time was changed as identified in Table 3. In Comparative Examples 4 to 6, the entire amount of the alkylene oxide and the like could not be charged, and no desired product was obtained.

### (Comparative Example 7)

It was attempted to produce a polyether in the same manner as in Example 10 except for the mixing treatment temperature, the mixing treatment pressure and the mixing treatment time (as identified in Table 3). However, the entire amount of the alkylene oxide and the like could not be charged, and no desired product was obtained.

The production conditions and the results of measurement of the physical properties of the formed product polyether in Examples and Comparative Examples are shown in Tables 2 and 3. In Tables 2 and 3, "initial catalyst concentration" means the concentration of the DMC catalyst based on the amount of the initiator. Further, "final catalyst concentration" means the concentration of the DMC catalyst based on the amount of a polyether obtained by subjecting the alkylene oxide and the oxygen-containing heterocyclic compound other than an alkylene oxide to ring-opening addition polymerization to the initiator having a hydroxy group in the presence of the DMC catalyst.

**TABLE 2**

| Ex. | Initiator | Alkylene oxide and the like | Initial catalyst concentration | | Pretreatment (mixing treatment) conditions | | | Final catalyst concentration | | Properties of polyether | | | |
|---|---|---|---|---|---|---|---|---|---|---|---|---|---|
| | | | (ppm) | (Calculated as metal concentration) (ppm) | Temp. (°C) | Pressure (absolute pressure) (MPa) | Time (min) | (ppm) | (Calculated as metal concentration) (ppm) | Molecular weight (as calculated as hydroxy value) | Number average molecular weight (Mn) (as calculated as GPC) | Molecular weight distribution (Mw/Mn) | Viscosity (25°C) (mPa·s) |
| 1 | a1 | EO/ε-caprolactone=1/1 | 60 | 13 | 140 | 0.001 | 60 | 20 | 4 | 2400 | 2460 | 1.060 | - |
| 2 | | | 60 | 13 | 140 | 0.003 | 60 | 20 | 4 | 2390 | 2450 | 1.061 | - |
| 3 | | | 60 | 13 | 140 | 0.005 | 60 | 20 | 4 | 2410 | 2470 | 1.059 | - |
| 4 | a2 | Phthalic anhydride, PO | 143 | 31 | 130 | 0.001 | 15 | 50 | 11 | 1950 | 1600 | 1.080 | 25000 |
| 5 | | | 143 | 31 | 130 | 0.001 | 60 | 50 | 11 | 1930 | 1580 | 1.081 | 25000 |
| 6 | | | 143 | 31 | 130 | 0.001 | 120 | 50 | 11 | 1930 | 1580 | 1.078 | 25000 |
| 7 | | | 143 | 31 | 125 | 0.001 | 60 | 50 | 11 | 1950 | 1600 | 1.082 | 25000 |
| 8 | | | 143 | 31 | 175 | 0.001 | 60 | 50 | 11 | 1950 | 1600 | 1.080 | 25000 |
| 9 | | PO, ε-capro.. lactone | 143 | 31 | 170 | 0.001 | 60 | 50 | 11 | 1980 | 2000 | 1.090 | - |
| 10 | a3 | EO/ε-caprolactone=1/1 | 63 | 14 | 140 | 0.001 | 60 | 13 | 3 | 1980 | 2200 | 1.060 | - |

**TABLE 3**

| Comp. Ex. | Initiator | Alkylene oxide and the like | Initial catalyst concentration | | Pretreatment (mixing treatment) conditions | | | Final catalyst concentration | | Properties of polyether | | | |
|---|---|---|---|---|---|---|---|---|---|---|---|---|---|
| | | | (ppm) | (Calculated as metal concentration) (ppm) | Temp. (°C) | Pressure (absolute pressure) (MPa) | Time (min) | (ppm) | (Calculated as metal concentration) (ppm) | Molecular weight (as calculated as hydroxy value) | Number average molecular weight (Mn) (as calculated as GPC) | Molecular weight distribution (Mw/Mn) | Viscosity (25°C) (mPa·s) |
| 1 | a1 | EO/ε-caprolactone=1/1 | 60 | 13 | No pretreatment | | | Production impossible | | | | | |
| 2 | | | 60 | 13 | 140 | 0.1 | 60 | Production impossible | | | | | |
| 3 | | | 300 | 66 | No pretreatment | | | 100 | 22 | 2390 | 2460 | 1.061 | - |
| 4 | a2 | Phthalic anhydride, PO | 143 | 31 | 80 | 0.001 | 60 | Production impossible | | | | | |
| 5 | | | 143 | 31 | 110 | 0.001 | 60 | Production impossible | | | | | |
| 6 | | | 143 | 31 | 130 | 0.001 | 5 | Production impossible | | | | | |
| 7 | a3 | EO/ε-caprolactone=1/1 | 63 | 14 | 130 | 0.1 | 30 | Production impossible | | | | | |

As shown in Examples in Table 2, by the mixing treatment of preliminarily mixing a small amount of the DMC catalyst of the present invention with the initiator at a temperature of from 125°C to 180°C under an absolute pressure of at most 0.06 MPa for from 10 minutes to 24 hours, the ring-opening addition polymerization of the alkylene oxide and the like to the initiator will smoothly proceed, and a polyether having a low viscosity and a narrow molecular weight distribution can be produced.

On the other hand, in Comparative Example 1 in which the DMC catalyst pretreatment was not carried out, a polyether could not be produced. In Comparative Example 3, although the DMC catalyst pretreatment was not carried out, a polyether could be produced as the DMC catalyst amount was increased. However, the amount of the DMC catalyst remaining in the polyether was large. In Comparative Examples 2 and 7 in which the mixing treatment pressure was at least 0.06 MPa by the absolute pressure, a polyether could not be produced. In Comparative Examples 4 and 5 in which the mixing treatment temperature was less than 125°C, a polyether could not be produced. In Comparative Example 6 in which the mixing treatment time is less than 10 minutes, a polyether could not be produced.

### INDUSTRIAL APPLICABILITY

The polyether of the present invention can be used for various urethane products by reaction with a polyisocyanate compound and optionally a chain extender. Further, the polyether of the present invention can be used also as a material of a lubricating oil such as a base oil for grease, a surfactant, a diluting agent, a plasticizer, a modifier or a viscosity index improving agent.

## Claims

1. A process for producing a polyether, which comprises subjecting an alkylene oxide and an oxygen-containing heterocyclic compound other than an alkylene oxide, to ring-opening addition polymerization to an initiator having a hydroxy group in the presence of a double metal cyanide complex catalyst, wherein prior to the ring-opening addition polymerization, the double metal cyanide complex catalyst and the initiator are subjected to mixing treatment at a temperature of from 125°C to 180°C under an absolute pressure of at most 0.06 MPa for from 10 minutes to 24 hours.

2. The process for producing a polyether according to Claim 1, wherein the amount of the double metal cyanide complex catalyst is from 10 to 200 ppm based on the initiator.

3. The process for producing a polyether according to Claim 1 or 2, wherein the initiator is at least one member selected from compounds having from 1 to 12 hydroxy groups on average in one molecule and having a number average molecular weight (Mn) of from 18 to 20,000.

4. The process for producing a polyether according to any one of Claims 1 to 3, 4. wherein the oxygen-containing heterocyclic compound other than an alkylene oxide is at least one member selected from the group consisting of a cyclic ether other than an alkylene oxide, a carboxylic anhydride and a cyclic ester.

5. The process for producing a polyether according to any one of Claims 1 to 4, wherein the polyether is a polyether monool, a polyether polyol, a polyester ether monool, a polyester ether polyol or a derivative thereof.

6. The process for producing a polyether according to any one of Claims 1 to 5, wherein the content of the remaining double metal cyanide complex catalyst is from 1 to 80 ppm based on the entire amount of the polyether produced.

7. The process for producing a polyether according to any one of Claims 1 to 6, wherein the alkylene oxide is ethylene oxide or propylene oxide.

8. The process for producing a polyether according to any one of Claims 1 to 7, wherein the double metal cyanide complex catalyst has an organic ligand comprising tert-butyl alcohol.

9. A process for producing a polyurethane resin comprising performing the method steps according to any one of claims 1 to 8 and reacting the polyether obtained thereby, with a polyisocyanate compound.

## Patentansprüche

1. Verfahren zur Herstellung eines Polyethers, das ein Unterwerfen eines Alkylenoxids und einer Sauerstoff-enthaltenden heterozyklischen Verbindung, die kein Alkylenoxid ist, unter eine Ringöffnungsadditionspolymerisation mit einem Initiator, der eine Hydroxygruppe aufweist, in Gegenwart eines Doppelmetall-Zyanidkomplex-Katalysators, umfasst, wobei vor der Ringöffnungsadditionspolymerisation der Doppelmetall-Zyanidkomplex-Katalysator und der Initiator einer Mischbehandlung bei einer Temperatur von 125°C bis 180°C unter einem absolutem Druck von höchstens 0,06 MPa für 10 Minuten bis 24 Stunden unterworfen werden.

2. Das Verfahren zur Herstellung eines Polyethers nach Anspruch 1, wobei die Menge an Doppelmetall-Zyanidkomplex-Katalysator bei 10 bis 200 ppm, bezogen auf den Initiator, liegt.

3. Das Verfahren zur Herstellung nach Anspruch 1 oder 2, wobei der Initiator mindestens ein Element ist, ausgewählt aus Verbindungen mit 1 bis 12 Hydroxygruppen im Mittel in einem Molekül, und die ein MolekulargewichtsZahlenmittel (Mn) von 18 bis 20.000 aufweisen.

4. Das Verfahren zur Herstellung eines Polyethers nach einem der Ansprüche 1 bis 3, wobei die Sauerstoff-enthaltende heterozyklische Verbindung, die kein Alkylenoxid ist, mindestens ein Element ist, das ausgewählt wird aus der Gruppe, bestehend aus einem zyklischen Ether, der kein Alkylenoxid ist, einem Carbonsäureanhydrid und einem zyklischen Ester.

5. Das Verfahren zur Herstellung eines Polyethers nach einem der Ansprüche 1 bis 4, wobei der Polyether ein Polyethermonool, ein Polyetherpolyol, ein Polyestermonool, ein Polyesteretherpolyol oder ein Derivat davon ist.

6. Das Verfahren zur Herstellung eines Polyethers nach einem der Ansprüche 1 bis 5, wobei der Gehalt des verbleibenden Doppelmethall-Zyanidkomplex-Katalysators bei 1 bis 80 ppm, bezogen auf die Gesamtmenge des hergestellten Polyethers, liegt.

7. Das Verfahren zur Herstellung eines Polyethers nach einem der Ansprüche 1 bis 6, wobei das Alkylenoxid Ethylenoxid oder Propylenoxid ist.

8. Das Verfahren zur Herstellung eines Polyethers nach einem der Ansprüche 1 bis 7, wobei der Doppelmetall-Zyanidkomplex-Katalysator einen organischen Liganden aufweist, der tert-Butylalkohol umfasst.

9. Verfahren zur Herstellung eines Polyurethanharzes, umfassend eine Durchführung der Verfahrensschritte nach einem der Ansprüche 1 bis 8 und Umsetzung des dadurch erhaltenen Polyethers mit einer Polyisozsyanatverbindung.

## Revendications

1. Procédé pour produire un polyéther, qui comprend la soumission d'un oxyde d'alkylène et d'un composé hétérocyclique oxygéné autre qu'un oxyde d'alkylène à une polymérisation par addition par ouverture de cycle et à un amorceur comportant un groupe hydroxy en présence d'un catalyseur complexe de cyanure métallique double, dans lequel, avant la polymérisation par addition par ouverture de cycle, le catalyseur complexe de cyanure métallique double et l'amorceur sont soumis à un traitement de mélange à une température de 125°C à 180°C sous une pression absolue d'au plus 0,06 MPa pendant 10 minutes à 24 heures.

2. Procédé pour produire un polyéther selon la revendication 1, dans lequel la quantité du catalyseur complexe de cyanure métallique double est de 10 à 200 ppm par rapport à l'amorceur.

3. Procédé pour produire un polyéther selon la revendication 1 ou 2, dans lequel l'amorceur est au moins un membre choisi parmi les composés comportant en moyenne 1 à 12 groupe(s) hydroxy par molécule et présentant une masse moléculaire moyenne en nombre (Mn) de 18 à 20 000.

4. Procédé pour produire un polyéther selon l'une quelconque des revendications 1 à 3, dans lequel le composé hétérocyclique oxygéné autre qu'un oxyde d'alkylène est au moins un membre choisi dans l'ensemble constitué par un éther cyclique autre qu'un oxyde d'alkylène, un anhydride carboxylique, et un ester cyclique.

5. Procédé pour produire un polyéther selon l'une quelconque des revendications 1 à 4, dans lequel le polyéther est un polyéther-monool, un polyéther-polyol, un polyester-éther-monool, un polyester-éther-polyol, ou un dérivé de ceux-ci.

6. Procédé pour produire un polyéther selon l'une quelconque des revendications 1 à 5, dans lequel la teneur en le catalyseur complexe de cyanure métallique double restant est de 1 à 80 ppm par rapport à la quantité totale du polyéther produit.

7. Procédé pour produire un polyéther selon l'une quelconque des revendications 1 à 6, dans lequel l'oxyde d'alkylène est un oxyde d'éthylène ou un oxyde de propylène.

8. Procédé pour produire un polyéther selon l'une quelconque des revendications 1 à 7, dans lequel le catalyseur complexe de cyanure métallique double comporte un ligand organique comprenant de l'alcool tert-butylique.

9. Procédé pour produire une résine de polyuréthane, comprenant la mise en oeuvre des étapes de traitement de l'une quelconque des revendications 1 à 8, et la réaction du polyéther ainsi obtenu avec un composé polyisocyanate.
